# EUROPEAN PATENT APPLICATION

(11) **EP 4 614 409 A1**
(43) Date of publication of application: **10.09.2025**
(21) Application number: 25160599.4
(22) Date of filing: 27.02.2025
(51) Int. Cl.: G06Q 10/06, G06Q 10/20, G06N 3/045

(54) **WORK SUPPORT APPARATUS, WORK SUPPORT SYSTEM, AND WORK SUPPORT METHOD**

(30) Priority: 04.03.2024 JP 2024032527
(71) Applicant: Yokogawa Electric Corporation, Tokyo 180-8750 (JP)
(72) Inventor: SHIRASUNA, Miyori, Musashino-shi, Tokyo, 180-8750, (JP); OKAMOTO, Hiromi, Musashino-shi, Tokyo, 180-8750, (JP)
(74) Representative: Winter, Brandl - Partnerschaft mbB

(57) **Abstract**

Provided is a control unit (103) configured to acquire know-how information on work related to at least a plant (P1) or infrastructure from a worker terminal (10) that is used for the work performed by a person engaged in the work in a work site, accumulate the know-how information, generate, when inquiry information related to the work is accepted, based on the inquiry information, a question that requests generative AI that uses a large language model to generate a reply produced using the know-how information, generate presentation information that is presented to the worker terminal (10) corresponding to an inquiry source based on the reply to the question received from the generative AI, and transmit the presentation information to the worker terminal (10).

## Description

### BACKGROUND OF THE INVENTION

### 1. Field of the Invention

The present invention relates to a work support apparatus, a work support system, and a work support method.

### 2. Description of the Related Art

Conventionally, in various kinds of plants, such as factories, electrical power plants, electric power substations, or oil refinery facilities; various kinds of infrastructures, such as roads, gas, electricity, or water supply and sewerage systems; and the like, it is essential to perform maintenance work of an inspection, a repair, an operation, and, furthermore, management of various kinds of equipment, devices, road surfaces, wall surfaces, electric wires, pipes, or the like.

In this type of maintenance work, inheritance of knowledge held by skilled technical persons and their experimental rule are absolutely essential, but the reality is that it is difficult to inherit their knowledge and experimental rule due to a decrease in birth rate and aging of population of the skilled technical persons, a change in an industrial structure, or the like.

In response to this reality, there is a proposed technology that is able to extract desired know-how information by generating a database of the know-how information held by the skilled technical person, and inputting a keyword of the target equipment, an event, or the like in, for example, a water treatment facility (for example, see Japanese Laid-open Patent Publication No. 2012-118830).

However, in the conventional technology described above, there is a room for improvement in terms of performing a work support more simply and in a highly practical manner on the work related to at least a plant or infrastructure.

For example, when the conventional technology described above is used, in a case where the desired know-how information is extracted, there is a need to concretely input keywords to a text indicating what kind of event, what is the cause of this, and in what way on the basis of the so-called 5W1H (When, Where, Who, What, Why, and How). In other words, in the conventional technology described above, there is a problem in that it is complicated and it takes time and effort.

Furthermore, it is conceivable that a person engaged in work sometimes has inquiries about various events actually viewed on site; however, in the conventional technology described above, there is no word on whether or not an input of the keywords is able to be performed at a work site. As a result of this, when the conventional technology described above is used, there may possibly result in an inability to immediately solve a point in question or the like arisen from the person engaged in the work at the work site.

An object of the present invention is to provide a work support apparatus, a work support system, and a work support method capable of performing a work support more simply and in a highly practical manner on the work related to at least a plant or infrastructure.

### SUMMARY OF THE INVENTION

According to one aspect of embodiments, a work support apparatus includes a control unit. The control unit configured to: acquire know-how information on work related to at least a plant or infrastructure from a terminal device that is used for the work performed by a person engaged in the work in a work site; accumulate the know-how information; generate, when inquiry information related to the work is accepted, based on the inquiry information, a question that requests generative AI that uses a large language model to generate a reply produced using the know-how information; generate presentation information that is presented to the terminal device corresponding to an inquiry source based on the reply to the question received from the generative AI; and transmit the presentation information to the terminal device.

According to one aspect of embodiments, a work support system includes: a server device that manages a work support operation of work related to at least a plant or infrastructure; and a terminal device that is used for the work performed by a person engaged in the work in a work site. The server device acquires know-how information on the work from a terminal device, accumulates the know-how information, generates, when inquiry information related to the work is accepted, based on the inquiry information, a question that requests generative AI that uses a large language model to generate a reply produced using the know-how information, generates presentation information that is presented to the terminal device corresponding to an inquiry source based on the reply to the question received from the generative AI, and transmits the presentation information to the terminal device. The terminal device transmits the know-how information to the server device in a case where the terminal device is in a first mode, transmits the inquiry information to the server device in a case where the terminal device is in a second mode, receives the presentation information with respect to the inquiry information from the server device, and presents the presentation information to the person engaged in the work.

According to one aspect of embodiments, a work support method causes a computer to execute a process. The process includes: acquiring know-how information on work related to at least a plant or infrastructure from a terminal device that is used for the work performed by a person engaged in the work in a work site; accumulating the know-how information; generating, when inquiry information related to the work is accepted, based on the inquiry information, a question that requests generative AI that uses a large language model to generate a reply produced using the know-how information; generating presentation information that is presented to the terminal device corresponding to an inquiry source based on the reply to the question received from the generative AI; and transmitting the presentation information to the terminal device.

### BRIEF DESCRIPTION OF THE DRAWINGS

FIG. 1 is an explanation diagram illustrating, in outline, a work support method according to an embodiment;
FIG. 2 is a diagram illustrating an example of a configuration of a worker terminal according to the embodiment;
FIG. 3 is a diagram illustrating a display example of a display of the worker terminal;
FIG. 4 is a diagram illustrating one example of technical information, inquiry information, and a reply from a generative AI;
FIG. 5 is a diagram illustrating one example of presentation information;
FIG. 6 is a block diagram illustrating an example of a configuration of the worker terminal according to the embodiment;
FIG. 7 is a block diagram illustrating an example of a configuration of a server device according to the embodiment;
FIG. 8 is a diagram illustrating an example of registration of the technical information;
FIG. 9 is a diagram illustrating a processing sequence of a process performed in a work support system according to the embodiment;
FIG. 10 is a diagram (No. 1) illustrating another example of the technical information, the inquiry information, and the reply from the generative AI;
FIG. 11 is a diagram (No. 2) illustrating another example of the technical information, the inquiry information, and the reply from the generative AI; and
FIG. 12 is a diagram of a hardware configuration illustrating one example of a computer that implements a function of the server device according to the embodiment.

### DETAILED DESCRIPTION OF THE PREFERRED EMBODIMENTS

Preferred embodiments of a work support apparatus, a work support system, and a work support method disclosed in the present invention will be described in detail below with reference to the accompanying drawings. Furthermore, the present invention is not limited to the embodiments. In addition, the same components are denoted by the same reference numerals and an overlapping description will be omitted. Each of the embodiments can be used in any appropriate combination as long as they do not conflict with each other.

Furthermore, in the following, in a case where a plurality of same elements need to be distinguished, these elements may sometimes be denoted in the form of adding "-n" (n is a natural number) after the reference numerals that indicate these elements. In a case where these elements need not be particularly distinguished, this numbering assignment is not used.

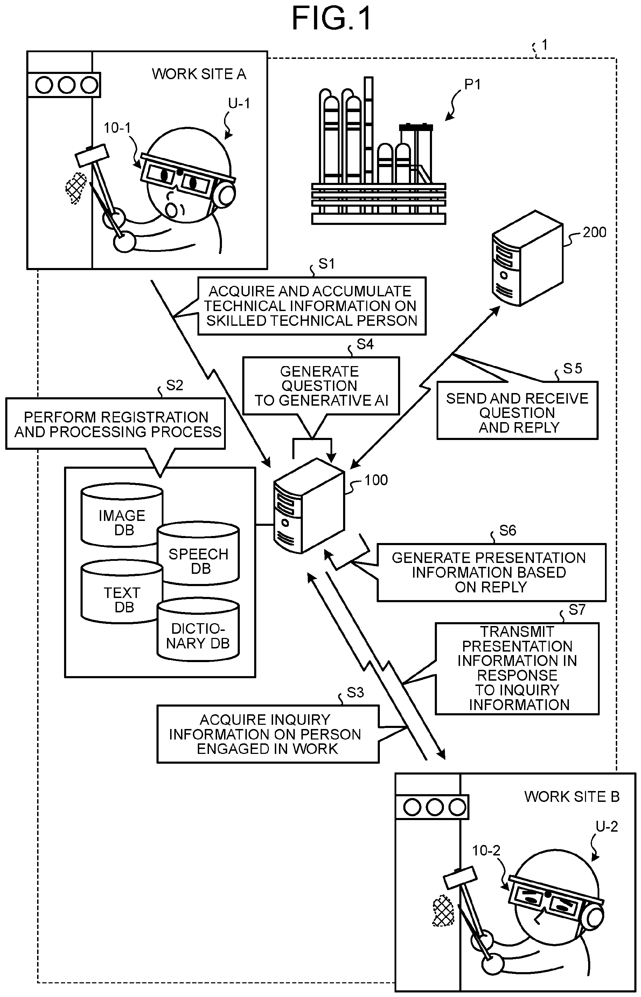

Furthermore, in the following, it is assumed that the work support system according to the embodiment is a work support system 1 (see FIG. 1) that supports maintenance work performed in a plant P1 (see FIG. 1). Furthermore, it is assumed that the work support apparatus according to the embodiment is a server device 100 (see FIG. 1). The server device 100 is a device that manages the overall work support operation performed in the work support system 1.

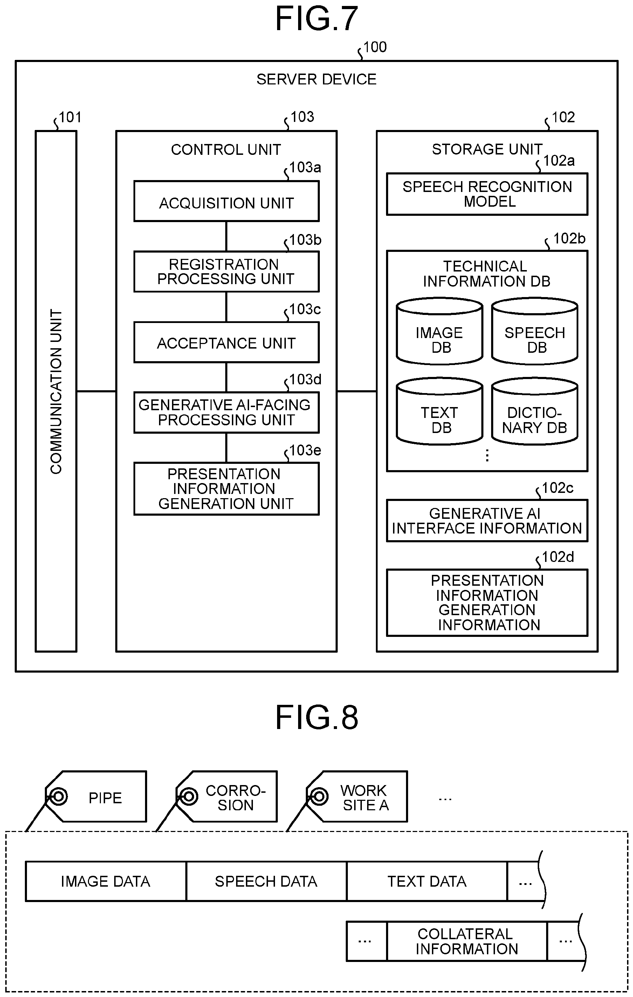

In the work support system 1, the server device 100 registers technical information received from a skilled technical person in a technical information database (DB) 102b (see FIG. 7). The technical information may be read as "know-how information". Furthermore, the server device 100 accepts inquiry information received from a worker terminal 10 that is used by a person engaged in work at a work site. Furthermore, the server device 100 generates a question to a generative artificial intelligence (AI) on the basis of the accepted inquiry information. At this time, the server device 100 generates the question such that a reply based on various kinds of technical information that have been registered in the technical information DB 102b is able to be obtained from the generative AI. Furthermore, the server device 100 generates presentation information that is presented to the person engaged in work on the basis of the reply obtained from the generative AI, and causes the worker terminal 10 to present the reply.

### Outline of work support method according to the present embodiment

The outline of the work support method according to the present embodiment will be described with reference to FIG. 1. FIG. 1 is an explanation diagram illustrating the outline of the work support method according to the present embodiment.

As illustrated in FIG. 1, the work support system 1 according to the embodiment is a system that is used in the plant P1. The work support system 1 includes two or more of the worker terminals 10, the server device 100, and a generative AI server 200. The worker terminals 10 and the server device 100 are connected so as to be able to communicate with each other. Furthermore, the server device 100 is also provided so as to be able to communicate with the generative AI server 200.

The worker terminal 10 is a portable type terminal device that is used at a work site by a person engaged in work (hereinafter, appropriately referred to as a "worker U") for maintenance work performed in the plant P1.

The worker terminal 10 is provided as, for example, a wearable device that is able to be worn by the worker U. In the present embodiment, the worker terminal 10 is the wearable device, and, is also an augmented reality (AR) terminal as an example. Moreover, the worker terminal 10 may be implemented by a mobile computer, such as a tablet terminal or a smartphone.

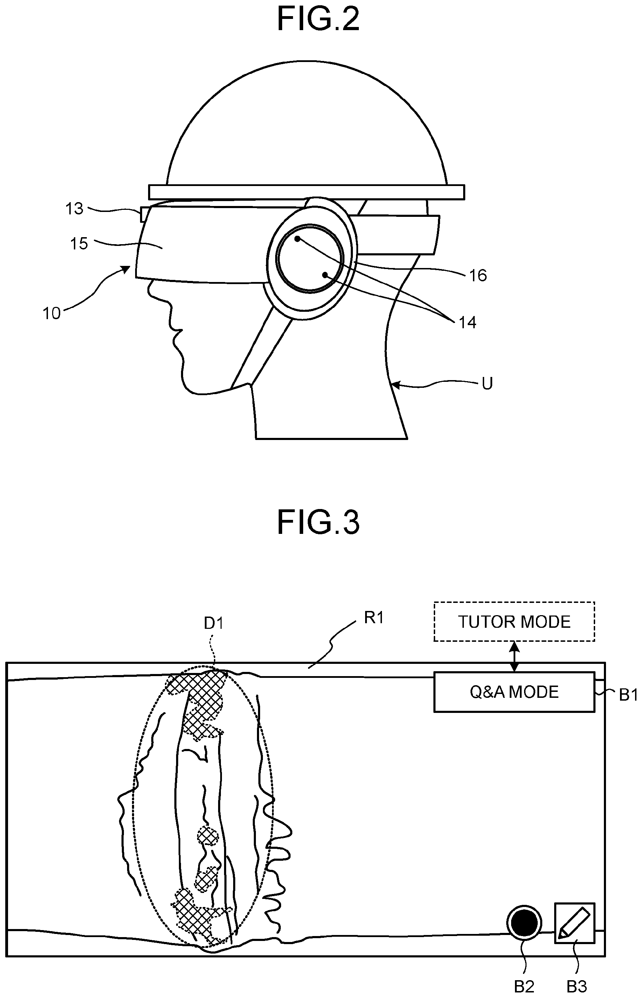

FIG. 2 is a diagram illustrating an example of a configuration of the worker terminal 10 according to the embodiment. As illustrated in FIG. 2, the worker terminal 10 is provided as a pair of AR glasses that can be worn on the head of the worker U. The worker terminal 10 includes a camera 13, a microphone 14, a display 15, and a speaker 16.

The camera 13 is provided so as to be able to capture an image of a real space in front of the worker U. The microphone 14 is provided so as to be able to collect voice of the worker U and sounds produced at the site. The display 15 is a display device that presents information to the worker U by superimposing virtual information that is not actually present in the real space onto the real space in front of the worker U.

The display 15 may be formed in an optical see-through type, or may be formed in a video see-through type. In the present embodiment, it is assumed that the display 15 is a display with a video see-through type that displays an image (including a moving image and a still image) captured by the camera 13 by superimposing the virtual information onto the image. The speaker 16 presents speech information to the worker U.

A description will be given here by referring back to FIG. 1. Moreover, as illustrated in FIG. 1, in the present embodiment, it is assumed that a worker U-1 in a work site A uses a worker terminal 10-1 and a worker U-2 in the work site B uses a worker terminal 10-2. Furthermore, it is assumed that the worker U-1 in the work site A is a skilled technical person and the worker U-2 in the work site B is an unskilled person engaged in work.

Then, in the work support system 1 according to the embodiment, first, the server device 100 acquires pieces of technical information on the skilled technical person and accumulates the acquired technical information (Step S1). Here, FIG. 3 is a diagram illustrating a display example of the display of the worker terminal 10.

As illustrated in FIG. 3, the worker terminal 10 includes a tutor mode and a Q&A mode. These modes are able to be switched by an operation performed on a switch button B1 by the worker U. The operation performed on each of actuating parts including a switch button B1 and the like may be performed via an operating unit 11 or the like that will be described later.

The tutor mode is a mode capable of recording the technical information provided by the skilled technical person. For example, it is possible to record the circumstance of the work performed by the worker U-1 selecting this mode and operating the record button B2.

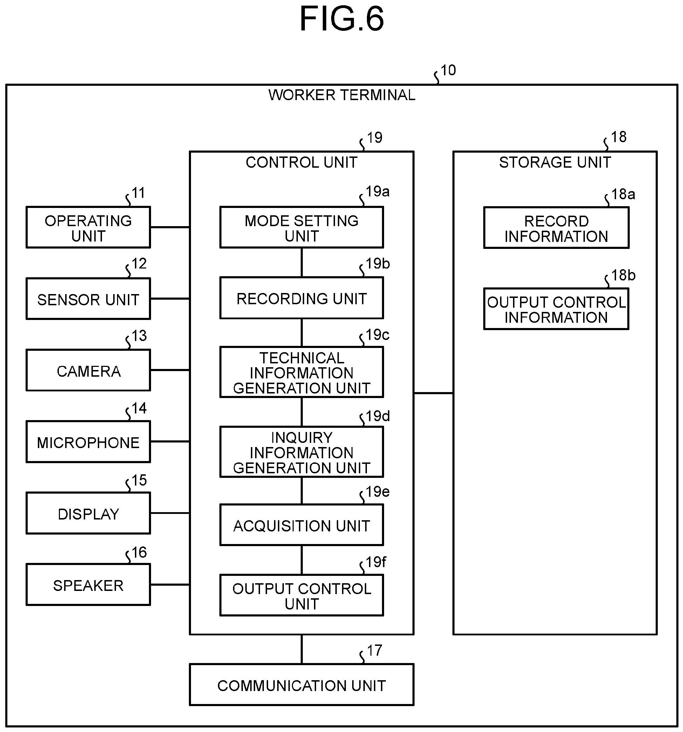

At this time, the image captured by the camera 13 is displayed in an area R1, and is recorded in a storage unit 18 (see FIG. 6) that will be described later. Furthermore, a speech uttered by the worker U-1 and a sound generated during the work are collected by the microphone 14, and are stored in the storage unit 18.

Furthermore, the worker U-1 is able to make a drawing in a notable portion or the like of the image displayed in, for example, the area R1 by using a drawing tool B3. FIG. 3 schematically illustrates the circumstance in which a pipe that is a work target is projected in the area R1. The worker U-1 is able to make an arbitrary drawing, such as enclosing a portion corresponding to, for example, corrosion of the pipe (see a closed curve D1 in FIG. 3) or drawing an arrow by using the drawing tool B3. It is also possible to record the drawing information on the obtained drawing together with the image by including the drawing information into the image.

Furthermore, the image, the speech, and the like that are recorded at the time of the tutor mode is transmitted from the worker terminal 10 to the server device 100 as the technical information.

Moreover, the Q&A mode will also be described. The Q&A mode is a mode capable of recording various kinds of information as inquiry information in a case where, for example, an unskilled person engaged in work has an inquiry or the like at the time of work performed at the site.

For example, it is possible to record various kinds of information that the worker U-2 desires to inquire by the worker U-2 by selecting this mode and operating the record button B2. In other words, the worker U-2 is able to record the image captured by the camera 13, the speech collected by the microphone 14, the drawing information on the drawing obtained by using the drawing tool B3, or the like.

Furthermore, the various kinds of information recorded at the time of the Q&A mode is transmitted from the worker terminal 10 to the server device 100 as inquiry information.

A description will be given here by referring back to FIG. 1. First, the server device 100 acquires the technical information that has been recorded in the tutor mode as described above, and performs a registration and processing process into the technical information DB 102b (Step S2). The captured image is registered in an image DB. The collected speeches are registered in a speech DB. Moreover, the speech is converted into a text as appropriate, and is registered in a text DB. The text registered in the text DB is used by the server device 100 in a case where, for example, an interface with respect to the generative AI that will be described later is only text.

Furthermore, the text registered in the text DB is used by the server device 100 in order for the server device 100 to generate a dictionary DB that is used to convert, for example, an industry terminology, a dialect, or the like into a standard terminology. Moreover, the server device 100 associates the technical information on the images, the speeches, the texts, and the like that are linked with each other in the technical information DB 102b, assigns tag information, and the like.

Next, the server device 100 acquires the inquiry information on, for example, the worker U-2 who is the person engaged in work in the work site B (Step S3). The inquiry information is recorded in the worker terminal 10-2 in a manner described above with reference to FIG. 3, and is transmitted to the server device 100.

Then, the server device 100 generates a question to the generative AI (the generative AI server 200) on the basis of the inquiry information (Step S4).

The generative AI server 200 is a server device that functions as a generative AI. The generative AI server 200 is implemented as, for example, a private cloud. The generative AI server 200 includes a generative AI model (not illustrated). The generative AI server 200 reads the generative AI model as a part of a program and operates, whereby the generative AI server 200 functions as the generative AI that generates a reply to a question received from the server device 100 and that transmits the reply to the server device 100.

The generative AI model is a multimodal large language model capable of accepting various kinds of inputs as, for example, modalities, such as a text, an image, and a speech. The generative AI model is, for example, a transfer based model, a recurrent neural network (RNN) based model, or the like.

The transfer based model is, for example, a generative pre-trained transformer (GPT), Bidirectional Auto Regressive Dialogues (BARD), or the like, but the transfer based model is not limited to these examples. The RNN based model is, for example, Receptance Weighted Key Value (RWKV), or the like, but the RNN based model is not limited to these examples. Moreover, the generative AI model may be, for example, a unimodal large language model capable of accepting only a text.

Moreover, in the present embodiment, it is assumed that, in the generative AI model included in the generative AI server 200, individualization (may be read as "fine-tuning") is carried out in accordance with a work support operation performed in the plant P1.

The server device 100 appropriately generates a question in accordance with an interface with respect to the generative AI server 200. At this time, the server device 100 generates a question to the generative AI server 200 such that the generative AI server 200 generates a reply by using the pieces of data that have been registered in the technical information DB 102b.

Then, the server device 100 sends and receives a question and a reply to and from the generative AI server 200 (Step S5). Furthermore, the server device 100 generates the presentation information on the basis of the reply obtained from the generative AI server 200 (Step S6). Then, the server device 100 transmits the presentation information in response to the inquiry information to the worker terminal 10-2 (Step S7).

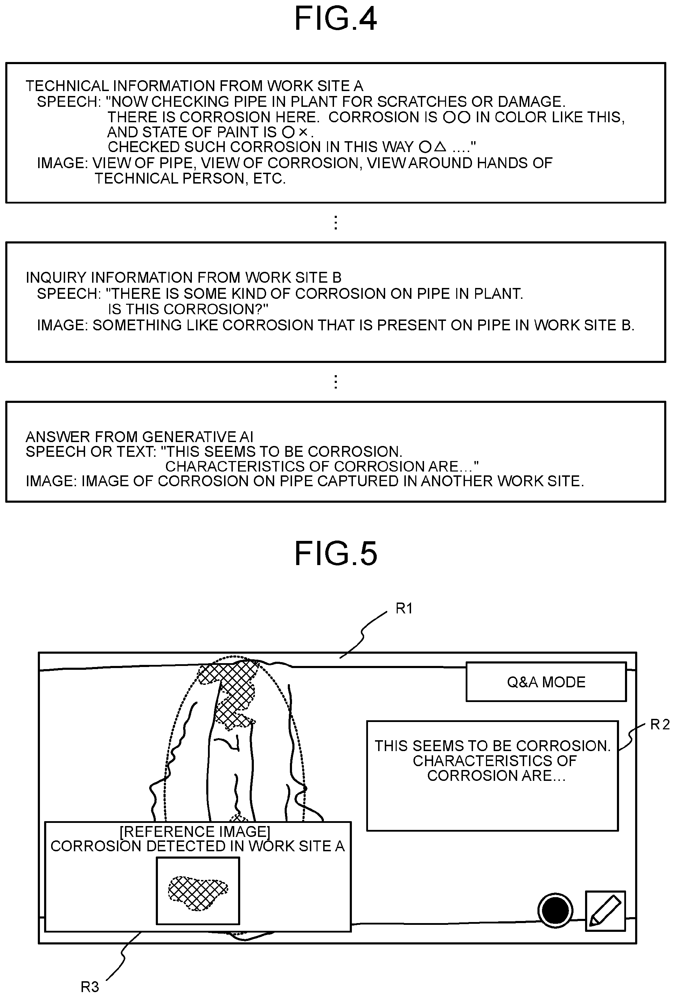

In the following, one example of the technical information, the inquiry information, the reply from the generative AI, and the presentation information generated in accordance with the reply will be described. FIG. 4 is a diagram illustrating one example of the technical information, the inquiry information, and the reply from the generative AI. Furthermore, FIG. 5 is a diagram illustrating one example of the presentation information.

As illustrated in FIG. 4, it is assumed that a speech and an image that are related to a certain pipe in the plant P1 and that are obtained at the time of the maintenance work performed on the pipes as the target have been provided from the worker U-1 as the technical information obtained from the work site A. As described above, the technical information is registered in the technical information DB 102b by the server device 100.

Then, as with the case of the work site A, it is assumed that, for example, an inquiry about corrosion of a certain pipe has been received as the inquiry information sent from the work site B in which maintenance work is performed on the pipes as the target. In this case, for example, a speech indicating that "There is some kind of corrosion on the pipe in the plant. Is this corrosion?", an image (including the above described drawing information) of something like corrosion that is present on the pipe provided in the work site B, and the like are transmitted from the worker terminal 10-2 in the work site B to the server device 100.

Then, the server device 100 generates a question to the generative AI server 200 on the basis of the inquiry information. In a case where the generative AI model is a multimodal large language model, the server device 100 generates a question using the speech and the image that are included in the inquiry information. In a case where the generative AI model is a unimodal large language model that accepts only a text, the server device 100 appropriately converts, for example, the speech or the like included in the inquiry information to a text, and generates a question.

The generative AI server 200 generates a reply to the question by using the pieces of data registered in the technical information DB 102b. In the example illustrated in FIG. 4, the generative AI server 200 generates a reply by using the technical information that has been recorded in the work site A and that is the technical information related to the similar pipe as that provided in, for example, the work site B.

Then, the server device 100 generates the presentation information in accordance with the worker terminal 10-2 that is the inquiry source on the basis of the generated reply. As illustrated in FIG. 5, the server device 100 generates the presentation information such that, for example, an area R2 in which at least a part of the reply received from the generative AI is presented is superimposed onto the area R1 of the display 15. Furthermore, the server device 100 generates the presentation information such that, for example, an area R3 in which the image of the corrosion detected in the work site A is presented as a reference image is also superimposed onto the area R1.

Moreover, FIG. 5 illustrates an example in which at least a part of the reply sent from the generative AI is displayed in the area R2, but the reply may be output from the speaker 16 as a speech. The worker U-2 is accordingly able to continuously perform the work in the work site B while receiving this sort of presentation information obtained in response to the inquiry made by the worker U-2. Furthermore, even when the worker U-1 is not present in the work site B, the worker U-2 is able to substantially receive inheritance of the technology received from the worker U-1.

In this say, in the work support method according to the embodiment, the server device 100 acquires the technical information on the work related to at least the plant P1 or infrastructure from the worker terminal 10 that is used in the work site by the worker U, and accumulates the technical information. Furthermore, in a case where the server device 100 accepts the inquiry information related to the work, the server device 100 generates, on the basis of the inquiry information, a question that requests the generative AI that uses the large language model to generate a reply produced using the technical information.
Furthermore, the server device 100 generates the presentation information that is presented to the worker terminal 10 that is the inquiry source on the basis of the reply to the question received from the generative AI. Furthermore, the server device 100 transmits the presentation information to the worker terminal 10. As a result of this, it is possible to perform work support more simply and in a highly practical manner on the work related to at least the plant P1 or infrastructure.

In the following, an example of a configuration of the work support system 1 in which the work support method according to the embodiment is applied will be more specifically described.

### Example of configuration of worker terminal 10

FIG. 6 is a block diagram illustrating an example of the configuration of the worker terminal 10 according to the embodiment. Moreover, FIG. 5 and FIG. 6 each illustrating only the component elements needed for explaining the present embodiment by using a functional block diagram, and illustrations of the general component elements are omitted.

Furthermore, in descriptions below with reference to FIG. 5 and FIG. 6, descriptions of the already described component elements are simplified or omitted as appropriate.

As illustrated in FIG. 5, the worker terminal 10 includes the operating unit 11, a sensor unit 12, the camera 13, the microphone 14, the display 15, the speaker 16, a communication unit 17, the storage unit 18, and a control unit 19.

The operating unit 11 is implemented as a controller that operates, for example, the AR glasses. The operating unit 11 accepts an operation performed on the worker terminal 10 by the worker U. For example, the operating unit 11 accepts an operation performed on each of the switch button B1, the record button B2, and the drawing tool B3 that have been described above.

The sensor unit 12 is a group of various kinds of sensors mounted on the worker terminal 10. The sensor unit 12 includes, for example, a global positioning system (GPS) sensor, a G sensor, an angular rate sensor, and the like. The pieces of sensor data obtained by the sensor unit 12 may be appropriately included in, for example, the technical information or the inquiry information as collateral information.

Descriptions of the camera 13, the microphone 14, the display 15, and the speaker 16 have already been given; therefore, the descriptions thereof will be omitted.

The communication unit 17 is implemented by a network adapter, or the like. The communication unit 17 connects the worker terminal 10 and the server device 100 by wireless communication and/or wire communication so as to be able to communicate with each other.

The storage unit 18 is implemented by a storage device, such as a random access memory (RAM), a flash memory, or a hard disk drive (HDD). The storage unit 18 may also be implemented by a memory card, such as an SD card. The storage unit 18 stores therein a program according to the embodiment executed by the control unit 19. Furthermore, the storage unit 18 stores therein various kinds of information that are used in information processing performed by the control unit 19.

In the example illustrated in FIG. 6, the storage unit 18 stores therein record information 18a and output control information 18b. In the record information 18a, the image, the speech, and the like that are recorded by the operation performed on the record button B2 described above are stored. The output control information 18b is information that includes various kinds of parameters that are used when an output control unit 19f that will be described later outputs the presentation information.

The control unit 19 corresponds to a so-called processor. The control unit 19 is implemented by a central processing unit (CPU), a micro processing unit (MPU), a graphics processing unit (GPU), or the like.

The control unit 19 reads the program according to the embodiment that is stored in the storage unit 18 and then executes the read program by using the RAM as a work area. Moreover, the control unit 19 may also be implemented by an integrated circuit, such as an application specific integrated circuit (ASIC) or a field programmable gate array (FPGA).

The control unit 19 includes a mode setting unit 19a, a recording unit 19b, a technical information generation unit 19c, an inquiry information generation unit 19d, an acquisition unit 19e, and the output control unit 19f, and implements or executes the function and the operation of the information processing that will be described below.

Moreover, the internal configuration of the control unit 19 is not limited to the configuration illustrated in FIG. 6, but another configuration may be used as long as the configuration in which the information processing that will be described below is able to be performed is used. Furthermore, the connection relation among each of the processing units included in the control unit 19 is not limited to the connection relation illustrated in FIG. 6, but another connection relation may also be used.

The mode setting unit 19a switches the worker terminal 10 to the tutor mode or the Q&A mode on the basis of the operation performed on the switch button B1 described above. The recording unit 19b records an image, a speech, or the like related to the technical information or the inquiry information on the basis of the operation performed on the record button B2 described above.

The technical information generation unit 19c generates the technical information that is to be transmitted to the server device 100, on the basis of the record information 18a when the worker terminal 10 is in the tutor mode. Furthermore, the technical information generation unit 19c transmits the generated technical information to the server device 100 via the communication unit 17.

The inquiry information generation unit 19d generates the inquiry information that is to be transmitted to the server device 100, on the basis of the record information 18a when the worker terminal 10 is in Q&A mode. Furthermore, the inquiry information generation unit 19d transmits the generated inquiry information to the server device 100 via the communication unit 17.

The acquisition unit 19e acquires the presentation information that has been generated in the server device 100 via the communication unit 17. The output control unit 19f performs output control of presentation information that is presented to the display 15 and/or the speaker 16 on the basis of the presentation information and the output control information 18b that have been acquired by the acquisition unit 19e.

Example of configuration of server device 100 In the following, an example of a configuration of the server device 100 according to the embodiment will be described. FIG. 7 is a block diagram illustrating an example of the configuration of the server device 100 according to the embodiment.

As illustrated in FIG. 7, the server device 100 includes a communication unit 101, a storage unit 102, and a control unit 103. The communication unit 101 is implemented by a network adapter, or the like. The communication unit 101 connects the server device 100, the worker terminal 10, and the generative AI server 200 by wireless communication and/or wire communication so as to be able to communicate with each other.

The storage unit 102 is implemented by a storage device, such as a RAM, a flash memory, or an HDD. The storage unit 102 stores therein a program according to the embodiment executed by the control unit 103. Furthermore, the storage unit 102 stores therein various kinds of information that are used in information processing performed by the control unit 103.

In the example illustrated in FIG. 7, the storage unit 102 stores therein a speech recognition model 102a, the technical information DB 102b, generative AI interface information 102c, and presentation information generation information 102d.

The speech recognition model 102a is a learning model that is used for speech recognition of the speech that has been uttered by the worker U and that is included in the technical information or the inquiry information received from the worker terminal 10. The speech recognition model 102a is, for example, a hidden Markov model (HMM) or a deep neural network (DNN) model. The speech recognition model 102a may be a combination model of the HMM model and the DNN model. The speech recognition model 102a is used to convert the speech uttered by the worker U into a text or is used to generate the dictionary DB.

Although described above, the technical information DB 102b is a database in which the technical information transmitted from the worker terminal 10 at the time of the tutor mode is registered. The technical information DB 102b includes the image DB, the speech DB, the text DB, and the dictionary DB.

Here, FIG. 8 is a diagram illustrating an example of the registration of the technical information. In the technical information DB 102b, as illustrated in FIG. 8, the image data registered in the image DB, the speech data registered in the speech DB, the text data registered in the text DB, and the like are associated with each other by the registration process performed by a registration processing unit 103b that will be described later. At this time, the pieces of sensor data, and the like obtained by the sensor unit 12 described above are also associated with these pieces of data as the collateral information.

Furthermore, as illustrated in FIG. 8, in the registration process performed by the registration processing unit 103b, various kinds of tag data are assigned to the data group that has been associated in this manner described above. For example, in the example that has already been described above with reference to FIG. 3, the tag data that indicates meta information on the technical information, such as the "pipe", "corrosion", and the "work site A", is assigned. The generative AI server 200 is also able to use the tag data as label information when the generative AI server 200 generates a reply to a question.

A description will be given here by referring back to FIG. 7. The generative AI interface information 102c is information related to an interface for the server device 100 sending and receiving a question and a reply to and from the generative AI server 200. The generative AI interface information 102c includes an application programming interface (API) used for, for example, a generative AI.

The presentation information generation information 102d is information that includes various kinds of parameters that are used when the presentation information that is present to the worker terminal 10 is generated. The presentation information generation information 102d includes information related to a coordinate system or the like of an AR display space included in, for example, the display 15 of the worker terminal 10.

The control unit 103 corresponds to a so-called processor. The control unit 103 is implemented by a CPU, a MPU, a GPU, or the like.

The control unit 103 reads the program according to the embodiment that is stored in the storage unit 102 and then executes the read program by using the RAM as a work area. Moreover, the control unit 103 may also be implemented by an integrated circuit, such as an ASIC or a FPGA.

The control unit 103 includes an acquisition unit 103a, the registration processing unit 103b, an acceptance unit 103c, a processing unit for generative AI 103d, and a presentation information generation unit 103e, and implements or executes the function and the operation of the information processing that will be described below.

Moreover, the internal configuration of the control unit 103 is not limited to the configuration illustrated in FIG. 7, but another configuration may be used as long as the configuration in which the information processing that will be described below is able to be performed is used. Furthermore, the connection relation among each of the processing units included in the control unit 103 is not limited to the connection relation illustrated in FIG. 7, but another connection relation may also be used.

The acquisition unit 103a acquires the technical information or the inquiry information sent from the worker terminal 10 via the communication unit 101. The registration processing unit 103b performs the above described registration process for registering the technical information acquired by the acquisition unit 103a in the technical information DB 102b while appropriately processing the technical information.

The acceptance unit 103c accepts the inquiry information acquired by the acquisition unit 103a, and causes the generative AI-facing processing unit 103d to perform a process that interact with the generative AI in accordance with the accepted inquiry information.

The generative AI-facing processing unit 103d performs the process that interact with the generative AI on the basis of the inquiry information accepted by the acceptance unit 103c. Specifically, the generative AI-facing processing unit 103d generates a question that is to be transmitted to the generative AI server 200 on the basis of the inquiry information and the generative AI interface information 102c. At this time, the generative AI-facing processing unit 103d converts the speech that has been uttered by the worker U and that is included in the inquiry information into a text by using, as needed, the speech recognition model 102a.

Furthermore, the generative AI-facing processing unit 103d transmits the generated question to the generative AI server 200 via the communication unit 101. Furthermore, the generative AI-facing processing unit 103d acquires the reply to the question from the generative AI server 200 via the communication unit 101.

The presentation information generation unit 103e generates the presentation information that is to be transmitted to the worker terminal 10 on the basis of the reply received from the generative AI server 200 acquired by the generative AI-facing processing unit 103d and on the basis of the presentation information generation information 102d. Furthermore, the presentation information generation unit 103e transmits the generated presentation information to the worker terminal 10 that is the inquiry source via the communication unit 101.

### Flow of process performed by work support system 1

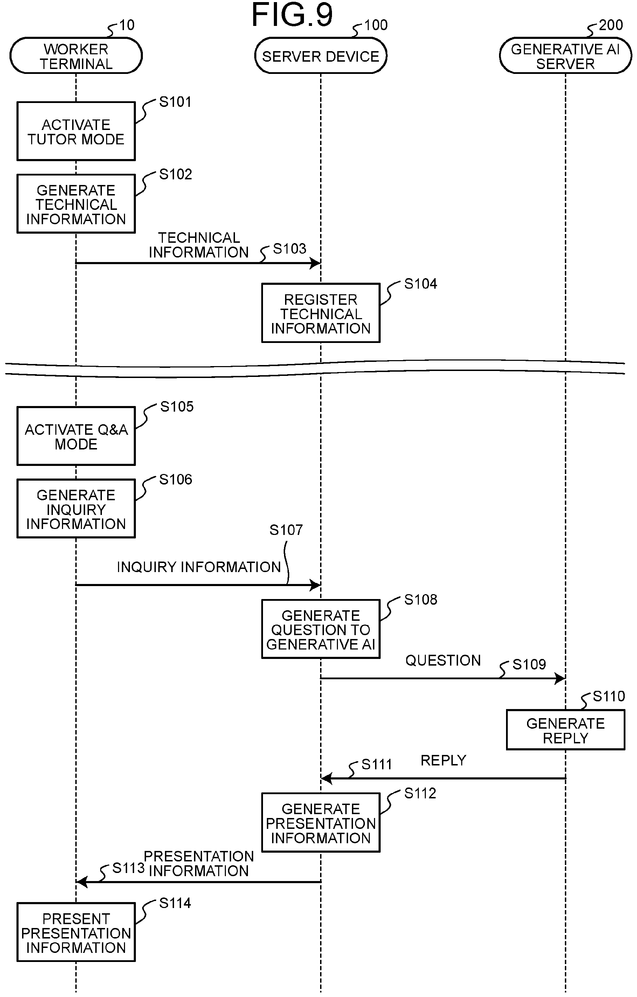

In the following, the flow of a process performed by the work support system 1 will be described with reference to FIG. 9. FIG. 9 is a diagram illustrating a processing sequence performed by the work support system 1 according to the embodiment.

As illustrated in FIG. 9, it is assumed that the worker terminal 10 has been activated in the tutor mode (Step S101). In this case, the worker terminal 10 records the circumstance of the work performed by the worker U who uses the worker terminal 10, and generates the technical information (Step S102).

Then, the worker terminal 10 transmits the generated technical information to the server device 100 (Step S103). The server device 100 registers the technical information received from the worker terminal 10 (Step S104). As a result of the processes between Step S101 and Step S104 being repeatedly performed, pieces of know-how information obtained by the skilled technical person are accumulated in the technical information DB 102b.

In contrast, it is assumed that the worker terminal 10 has been activated in the Q&A mode (Step S105). In this case, the worker terminal 10 generates the inquiry information on the basis of the image, the speech, or the like recorded in accordance with an operation performed by the worker U who uses the worker terminal 10 (Step S106).

Then, the worker terminal 10 transmits the generated inquiry information to the server device 100 (Step S107). The server device 100 generates a question to the generative AI on the basis of the inquiry information received from the worker terminal 10 (Step S108). Then, the server device 100 transmits the generated question to the generative AI, that is, the generative AI server 200 (Step S109).

The generative AI server 200 that has received the question generates a reply in accordance with the question by using the generative AI model (Step S110), and transmits the generated reply to the server device 100 (Step S111). The server device 100 generates the presentation information on the basis of the reply received from the generative AI server 200 (Step S112), and transmits the generated reply to the worker terminal 10 (Step S113).

Then, the worker terminal 10 presents the presentation information received from the server device 100 (Step S114).

Another example of technical information, inquiry information, and reply received from generative AI

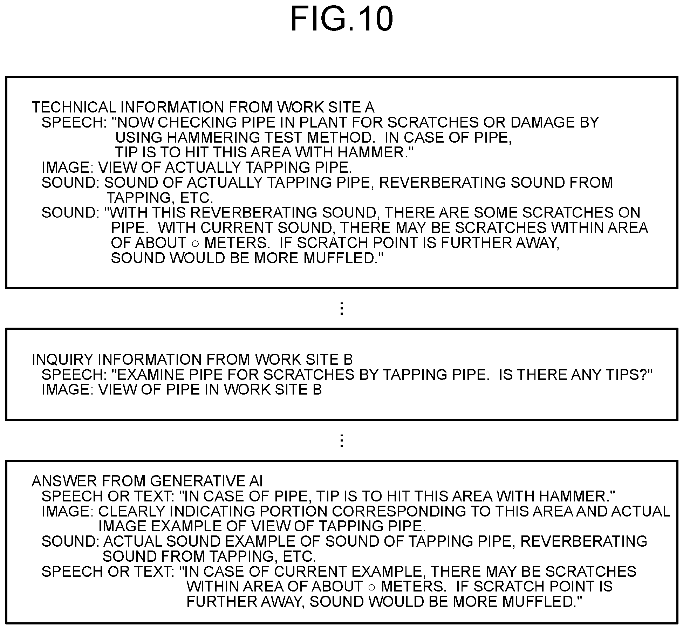

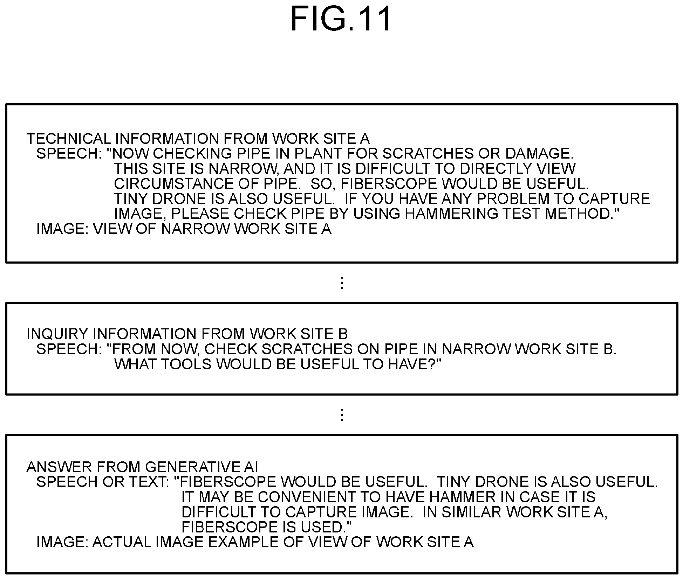

In the above, one example of the technical information, the inquiry information, and the reply received from the generative AI has been described above with reference to FIG. 4. In addition, another example will be described with reference to FIG. 10 and FIG. 11. FIG. 10 is a diagram (No. 1) illustrating another example of the technical information, the inquiry information, and the reply received from the generative AI. Furthermore, FIG. 11 is a diagram (No. 2) illustrating another example of the technical information, the inquiry information, and the reply received from the generative AI.

FIG. 10 illustrates an example of a case in which maintenance work is performed on a pipe by using, for example, a hammering test method. In this case, as illustrated in FIG. 10, as the technical information received from the work site A, for example, a speech, an image, and the like including a technique used at the time of tapping the pipe, a sound generated when the pipe is actually tapped, a reverberating sound with respect to the generated sound, a comment recognized from the reverberating sound, and the like are provided from the worker terminal 10-1.

The server device 100 registers the technical information in the technical information DB 102b. At this time, the server device 100 may perform image analysis for specifying a portion of the pipe that is actually tapped (i.e., a point of application), a position a hammer, a posture of the hammer, and the like, and may collectively register an image, a text, and the like that correspond to the analysis results. As a result of this, it is possible to further reinforce the technical information, and it is highly likely to obtain a reply with high accuracy in terms of the generative AI.

Furthermore, the server device 100 may perform frequency analysis of an actual sound of tapping the pipe, a reverberating sound, or the like, and may collectively register a spectrogram image or the like that correspond to the analysis results. With this method, it is also possible to further reinforce the technical information.

Then, as with the case of the work site A, in a case where, for example, an inquiry about "Is there any tips?" has been received as the inquiry information received from the work site B in which maintenance work is performed on the pipe by using the hammering test method, the server device 100 generates a question to the generative AI server 200 on the basis of this inquiry information.

The generative AI server 200 generates a reply to the question by using each of the pieces of data that haven been registered in the technical information DB 102b. In the example illustrated in FIG. 10, the generative AI server 200 generates a reply by using the technical information on the work site A in which the maintenance work has been performed on the pipe by using the hammering test method that is the same method as that used in, for example, the work site B.

At this time, as illustrated in FIG. 10, the generative AI server 200 generates a reply that clearly indicating a portion corresponding to, for example, "this area". This is made possible by registering, in the server device 100, the image and the like corresponding to the analysis results obtained by the image analysis that specifies, as described above, the portion of the pipe that is actually tapped, the position of the hammer, the posture of the hammer, and the like.

Subsequently, FIG. 11 illustrates an example in which, for example, an inquiry is received from the worker U-2 who performs maintenance work related to the pipe in the narrow work site B. In this case, as illustrated in FIG. 11, for example, a speech, an image, and the like related to a tool or the like that is used when the maintenance work has been performed on the pipe in the narrow work site A in a similar manner are useful as the technical information that has been obtained from the work site A.

In this case, as the inquiry information received from the work site B, in a case where an inquiry of, for example, "What tools would be useful to have?" has been received, the server device 100 generates a question to the generative AI server 200 on the basis of this inquiry information. Moreover, the inquiry information sent from the work site B at this time need not always be sent from the work site B.

The generative AI server 200 generates a reply to the question by using each of the pieces of data that have been registered in the technical information DB 102b. In the example illustrated in FIG. 11, the generative AI server 200 uses the technical information on the narrow work site A that is similar to, for example, the work site B, and generates a reply indicating that a fiberscope, a tiny drone, or the like would be useful.

As a result of this, it is possible for the worker U-2 who is planning to perform work in the work site B to obtain a useful reply and the presentation information based on the useful reply via the generative AI on the basis of the technical information registered in the technical information DB 102b before the worker U-2 actually goes to the work site B.

### Modification

Moreover, in the above described embodiment, it is assumed that the worker terminal 10 is switched to the tutor mode by an operation performed on the switch button B1, but the worker terminal 10 may be switched to the tutor mode by only a predetermined qualified person or a predetermined certified technical person.

In this case, the work support system 1 may have authentication information on the qualified person or the certified technical person, and the worker terminal 10 may be configured to be switched to the tutor mode only in the case where the worker U who uses the worker terminal 10 is authenticated by the authentication information at the time of activation of the worker terminal 10. As a result of this, it is possible to enhance the reliability of the pieces of technical information accumulated in the technical information DB 102b. Furthermore, as a result of this, this makes it possible for the generative AI to generate a reply with high reliability.

Furthermore, in the above described embodiment, technology inheritance related to the maintenance work performed in the plant P1 has been described as a typical example, but, in addition to technology inheritance, it is possible to utilize the present embodiment to overcome the problems in the work sites, eliminate minor incidents, improve work efficiency, or the like.

### Effects

As described above, the server device 100 (corresponding to one example of the "work support apparatus") according to the embodiment includes the control unit 103. The control unit 103 acquires know-how information on the work related to at least the plant P1 or infrastructure from the worker terminal 10 that is used by the worker U in the work site; accumulate the know-how information; generates, when the inquiry information related to the above described work has been accepted, on the basis of the inquiry information, a question that requests the generative AI that uses the large language model to generate a reply produced using the above described know-how information; generates the presentation information that is presented to the worker terminal 10 corresponding to the inquiry source on the basis of the above described reply that is related to the question and that is received from the generative AI; and transmits the presentation information to the worker terminal 10. As a result of this, it is possible to perform work support more simply and in a highly practical manner on the work related to at least the plant P1 or the infrastructure.

Furthermore, the above described know-how information and the above described inquiry information include at least an image related to the above described work, a speech related to the above described work, and a text that has been converted from the speech, all of which have been recorded by the worker terminal 10, and, furthermore, the control unit 103 generates the above described question represented by at least one of the above described image, the above described speech, and the above described text in accordance with a modality capable of accepting the above described large language model. As a result of this, it is possible to generate an appropriate question in accordance with the large language model that is used by the generative AI.

Furthermore, the above described large language model is a multimodal large language model. As a result of this, it is possible to generate a question that uses various kinds of modalities from among the above described image, the above described speech, and the above described text, and this makes it possible to obtain a reply in response to the question with high accuracy from the generative AI.

Furthermore, the control unit 103 further performs the image analysis related to the above described image that is included in the above described know-how information, and adds the result of the image analysis to the know-how information. As a result of this, it is possible to further reinforce the know-how information, and this makes it more likely to obtain a further accurate reply from the generative AI.

Furthermore, the result of the image analysis includes information related to a position of a tool that is used by the worker U at the time of the above described work, a posture of the tool, and a point of application of the tool. As a result of this, for example, it is possible to obtain a reply that clearly indicating, for example, the position of the point of application indicated when the pipe is tapped by the hammer, the position of the hammer, and the posture of the hammer.

Furthermore, the control unit 103 further performs the frequency analysis related to the above described speech that is included in the above described know-how information, and adds the result of the frequency analysis to the above described know-how information. As a result of this, it is possible to further reinforce the know-how information related to the speech, and this makes it more likely to obtain a further accurate reply from the generative AI.

Furthermore, the result of the frequency analysis includes a spectrogram image. Consequently, this makes it more likely to obtain a further accurate reply using a spectrogram image related to the speech.

Furthermore, the worker terminal 10 is an AR terminal. As a result of this, it is possible to perform a work support using an AR technology.

Furthermore, the control unit 103 generates the above described presentation information such that the presentation information is superimposed onto a real space in an AR display space of the AR terminal. As a result of this, it is possible to present the highly convenient presentation information using the AR technology.

Furthermore, the above described know-how information includes the technical information that is related to the above described work provided by the worker U who is a skilled technical person. As a result of this, it is possible to inherit the knowledge of the skilled technical person and the experimental rule.

### Other embodiments

Moreover, in the above explanation, a description has been given of the embodiments according to the present invention; however, the present invention may also be implemented with various kinds of embodiments other than the embodiments described above.

### System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by the each of the devices can be implemented by a CPU and by programs analyzed and executed by the CPU or implemented as hardware by wired logic.

### Hardware

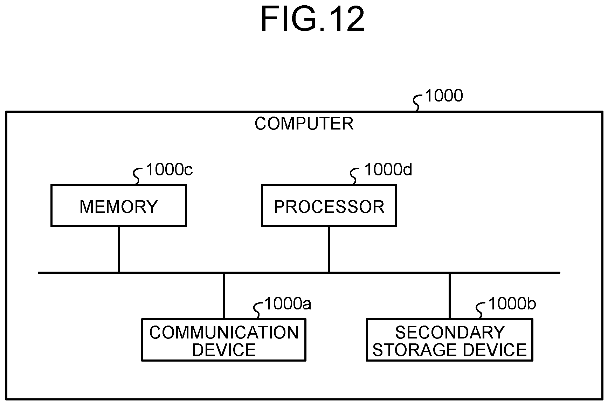

The worker terminal 10 and the server device 100 according to the embodiment described above are implemented by a computer 1000 having the configuration illustrated in, for example, FIG. 12. In the following, an explanation will be given by using the server device 100 as an example. FIG. 12 is a diagram of a hardware configuration illustrating one example of the computer 1000 that implements the function of the server device 100 according to the embodiment.

As illustrated in FIG. 12, the computer 1000 includes a communication device 1000a, a secondary storage device 1000b, a memory 1000c, and a processor 1000d. Furthermore, each of the units illustrated in FIG. 12 is connected by a bus or the like with each other.

The communication device 1000a is a network interface card (NIC) or the like, and communicates with another device. The secondary storage device 1000b is implemented by an HDD, or the like, and stores therein the programs and the databases that operate the functions illustrated in FIG. 7.

The processor 1000d operates the thread that executes each of the functions described above in FIG. 7 and the like by reading the programs that execute the same process as that performed by each of the processing units illustrated in FIG. 7 and the like from the secondary storage device 1000b or the like and loading the read programs in the memory 1000c. For example, the thread executes the same functions as those performed by each of the processing units included in the server device 100. Specifically, the processor 1000d reads, from the secondary storage device 1000b or the like, the programs having the same functions as those performed by the acquisition unit 103a, the registration processing unit 103b, the acceptance unit 103c, the generative AI-facing processing unit 103d, and the presentation information generation unit 103e, and the like. Then, the processor 1000d executes the thread for executing the same processes as those performed by the acquisition unit 103a, the registration processing unit 103b, the acceptance unit 103c, the generative AI-facing processing unit 103d, the presentation information generation unit 103e, and the like.

In this way, the computer 1000 is operated as an information processing apparatus that performs various kinds of processing methods by reading and executing the programs. Furthermore, the computer 1000 is also able to implement the same functions as those described above in the embodiment by reading the above described programs from a recording medium by a medium reading device and executing the read programs. Moreover, the programs described here are not limited to be executed by only the computer 1000. For example, the present invention may also be similarly used in a case in which a computer or a server each having another hardware configuration executes a program or in a case in which another computer and a server cooperatively execute the program with each other.

The programs may be distributed via a network, such as the Internet. Furthermore, the programs may be executed by storing the programs in a recording medium that can be read by a computer readable recording medium, such as an HDD, a flexible disk (FD), a CD-ROM, a magneto-optical disk (MO), a digital versatile disk (DVD), or the like, and read the programs from the recording medium by the computer. The recording medium in which these programs are recorded is also one mode of the present disclosure.

### Others

Some examples of combinations of the disclosed technical features are described in the following.
(1) A work support apparatus comprising:
   a control unit configured to:
   acquire know-how information on work related to at least a plant or infrastructure from a terminal device that is used for the work performed by a person engaged in the work in a work site;
   accumulate the know-how information;
   generate, when inquiry information related to the work is accepted, based on the inquiry information, a question that requests generative AI that uses a large language model to generate a reply produced using the know-how information;
   generate presentation information that is presented to the terminal device corresponding to an inquiry source based on the reply to the question received from the generative AI; and
   transmit the presentation information to the terminal device.
(2) The work support apparatus according to (1), wherein
   the know-how information and the inquiry information include at least an image related to the work, a speech related to the work, and a text that has been converted from the speech, all of which have been recorded by the terminal device, and
   the control unit is configured to generate the question represented by at least one of the image, the speech, and the text according to a modality capable of accepting the large language model.
(3) The work support apparatus according to (2), wherein the large language model is a multimodal large language model.
(4) The work support apparatus according to (2) or (3), wherein the control unit is further configured to:
   perform image analysis related to the image that is included in the know-how information, and
   add a result of the image analysis to the know-how information.
(5) The work support apparatus according to (4), wherein the result of the image analysis includes information related to a position of a tool that is used by the person engaged in the work at the time of the work, a posture of the tool, and a point of application of the tool.
(6) The work support apparatus according to any one of (2) to (5), wherein the control unit is further configured to:
   perform frequency analysis related to the speech included in the know-how information, and
   add a result of the frequency analysis to the know-how information.
(7) The work support apparatus according to (6), wherein the result of the frequency analysis includes a spectrogram image.
(8) The work support apparatus according to any one of (1) to (7), wherein the terminal device is an augmented reality (AR) terminal.
(9) The work support apparatus according to (8), wherein the control unit is configured to generate the presentation information such that the presentation information is superimposed onto a real space in an AR display space of the AR terminal.
(10) The work support apparatus according to any one of (1) to (9), wherein the know-how information includes technical information that is related to the work and that is provided by the person engaged in the work who is a skilled technical person.
(11) A work support system comprising:
   a server device that manages a work support operation of work related to at least a plant or infrastructure; and
   a terminal device that is used for the work performed by a person engaged in the work in a work site, wherein
   the server device
      acquires know-how information on the work from a terminal device, accumulates the know-how information,
      generates, when inquiry information related to the work is accepted, based on the inquiry information, a question that requests generative AI that uses a large language model to generate a reply produced using the know-how information,
      generates presentation information that is presented to the terminal device corresponding to an inquiry source based on the reply to the question received from the generative AI, and
      transmits the presentation information to the terminal device, and
   the terminal device
      transmits the know-how information to the server device in a case where the terminal device is in a first mode,
      transmits the inquiry information to the server device in a case where the terminal device is in a second mode,
      receives the presentation information with respect to the inquiry information from the server device, and
      presents the presentation information to the person engaged in the work.
(12) A work support method that causes a computer to execute a process comprising:
   acquiring know-how information on work related to at least a plant or infrastructure from a terminal device that is used for the work performed by a person engaged in the work in a work site;
   accumulating the know-how information;
   generating, when inquiry information related to the work is accepted, based on the inquiry information, a question that requests generative AI that uses a large language model to generate a reply produced using the know-how information;
   generating presentation information that is presented to the terminal device corresponding to an inquiry source based on the reply to the question received from the generative AI; and
   transmitting the presentation information to the terminal device.
(13) A program that causes a computer to execute a process comprising:
   acquiring know-how information on work related to at least a plant or infrastructure from a terminal device that is used for the work performed by a person engaged in the work in a work site;
   accumulating the know-how information;
   generating, when inquiry information related to the work is accepted, based on the inquiry information, a question that requests generative AI that uses a large language model to generate a reply produced using the know-how information;
   generating presentation information that is presented to the terminal device corresponding to an inquiry source based on the reply to the question received from the generative AI; and
   transmitting the presentation information to the terminal device.
(14) A computer-readable recording medium having stored therein a program that causes a computer to execute a process comprising:
   acquiring know-how information on work related to at least a plant or infrastructure from a terminal device that is used for the work performed by a person engaged in the work in a work site;
   accumulating the know-how information;
   generating, when inquiry information related to the work is accepted, based on the inquiry information, a question that requests generative AI that uses a large language model to generate a reply produced using the know-how information;
   generating presentation information that is presented to the terminal device corresponding to an inquiry source based on the reply to the question received from the generative AI; and
   transmitting the presentation information to the terminal device.

According to an aspect of one embodiment, it is possible to provide a work support apparatus, a work support system, and a work support method capable of performing a work support more simply and in a highly practical manner on the work related to at least a plant or infrastructure.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A work support apparatus (100) comprising:
a control unit (103) configured to:
acquire know-how information on work related to at least a plant (P1) or infrastructure from a terminal device (10) that is used for the work performed by a person engaged in the work in a work site;
accumulate the know-how information;
generate, when inquiry information related to the work is accepted, based on the inquiry information, a question that requests generative AI that uses a large language model to generate a reply produced using the know-how information;
generate presentation information that is presented to the terminal device (10) corresponding to an inquiry source based on the reply to the question received from the generative AI; and
transmit the presentation information to the terminal device (10).

2. The work support apparatus (100) according to claim 1, wherein
the know-how information and the inquiry information include at least an image related to the work, a speech related to the work, and a text that has been converted from the speech, all of which have been recorded by the terminal device (10), and
the control unit (103) is configured to generate the question represented by at least one of the image, the speech, and the text according to a modality capable of accepting the large language model.

3. The work support apparatus (100) according to claim 2, wherein the large language model is a multimodal large language model.

4. The work support apparatus (100) according to claim 2 or 3, wherein the control unit (103) is further configured to:
perform image analysis related to the image that is included in the know-how information, and
add a result of the image analysis to the know-how information.

5. The work support apparatus (100) according to claim 4, wherein the result of the image analysis includes information related to a position of a tool that is used by the person engaged in the work at the time of the work, a posture of the tool, and a point of application of the tool.

6. The work support apparatus (100) according to any one of claims 2 to 5, wherein the control unit (103) is further configured to:
perform frequency analysis related to the speech included in the know-how information, and
add a result of the frequency analysis to the know-how information.

7. The work support apparatus (100) according to claim 6, wherein the result of the frequency analysis includes a spectrogram image.

8. The work support apparatus (100) according to any one of claims 1 to 7, wherein the terminal device (10) is an augmented reality (AR) terminal.

9. The work support apparatus (100) according to claim 8, wherein the control unit (103) is configured to generate the presentation information such that the presentation information is superimposed onto a real space in an AR display space of the AR terminal.

10. The work support apparatus (100) according to any one of claims 1 to 9, wherein the know-how information includes technical information that is related to the work and that is provided by the person engaged in the work who is a skilled technical person.

11. A work support system comprising:
a server device that manages a work support operation of work related to at least a plant (P1) or infrastructure; and
a terminal device (10) that is used for the work performed by a person engaged in the work in a work site, wherein
the server device
acquires know-how information on the work from a terminal device (10), accumulates the know-how information,
generates, when inquiry information related to the work is accepted, based on the inquiry information, a question that requests generative AI that uses a large language model to generate a reply produced using the know-how information,
generates presentation information that is presented to the terminal device (10) corresponding to an inquiry source based on the reply to the question received from the generative AI, and
transmits the presentation information to the terminal device (10), and
the terminal device (10)
transmits the know-how information to the server device in a case where the terminal device (10) is in a first mode,
transmits the inquiry information to the server device in a case where the terminal device (10) is in a second mode,
receives the presentation information with respect to the inquiry information from the server device, and
presents the presentation information to the person engaged in the work.

12. A work support method that causes a computer to execute a process comprising:
acquiring know-how information on work related to at least a plant (P1) or infrastructure from a terminal device (10) that is used for the work performed by a person engaged in the work in a work site;
accumulating the know-how information;
generating, when inquiry information related to the work is accepted, based on the inquiry information, a question that requests generative AI that uses a large language model to generate a reply produced using the know-how information;
generating presentation information that is presented to the terminal device (10) corresponding to an inquiry source based on the reply to the question received from the generative AI; and
transmitting the presentation information to the terminal device (10).
